# EUROPEAN PATENT SPECIFICATION

(11) **EP 1 873 115 B1**
(45) Date of publication and mention of the grant of the patent: **24.10.2012**
(21) Application number: 07252527.2
(22) Date of filing: 21.06.2007
(51) Int. Cl.: B66F 11/04, E21B 19/15, F16L 1/024, E04G 1/22

(54) **Material storage rackfor an aerial lift with a work platform**
Materialienlagerregal für Hebebühnen
Etagère de stockage de matériel pour plate-forme de levage

(30) Priority: 21.06.2006 GB 0612263
(43) Date of publication of application: 02.01.2008
(73) Proprietor: Blue Sky Access Ltd, Central Park Lutterworth Leicestershire LE17 4PN (GB)
(72) Inventor: Cummings, Paul, Bicester, Oxfordshire OX6 9LA (GB)
(74) Representative: Franks & Co (South) Limited

(56) References cited:
- WO-A-2005/077711
- DE-A1- 3 505 174
- GB-A- 2 390 079
- GB-A- 2 397 055
- GB-A- 2 398 556
- US-A1- 2004 197 165
- US-B1- 6 527 492

## Description

### Field

This invention relates to material storage rack and in particular to apparatus used for the storage of lengths of material, in particular pipes or tubes, during construction of buildings.

### Background of the Invention

Building construction sites for large buildings frequently employ construction equipment for lifting large and heavy components into position during the construction of a building. For example, lengths of standard 8 inch ( 200mm) diameter steel pipe are typically 6 meters in length and may weigh in the order of 150 kgs. During construction of commercial building the overhead pipe work is typically lifted and fixed into position using aerial lifts.

A typical aerial lift is a mobile scissor lift available from JLG Ind. and which has a work platform which may be lifted into the air by a hydraulically operable scissor mechanism. For safety the work platform is surrounded by a safety barrier or fence.

As is described in WO 2005/077711, these lifts may be provided with auxiliary material handing equipment which is secured to the lift platform. The material handing apparatus described includes a pipe storage rack for the storing lengths of pipe on the aerial lift prior to.their installation.

The present invention provides a material storage rack for use on an aerial lift and which can be independently fitted to the lift platform.

### Statements of Invention

According to a first aspect of the present invention there is provided a storage rack for use on an aerial lift having a work platform surrounded by a safety barrier with a kick plate adjacent the platform, the storage rack having at least one leg with a foot which in use rests on the platform, the leg having coupling means thereon for securing the rack to kick plate.

The storage rack comprises a pair of spaced apart legs and preferably the two feet are interconnected by a base plate which also rests against the platform. At least one arm which in use also rests against platform may be attached to the base plate to extend normally inwardly thereof.

Each leg at its lower end portion is provided with a catch which is engagable with the kick plate to hold the respective foot adjacent the kick plate.

The upper end portion of the or each leg is detachably connected to an elongate material support, preferably comprising a pair of spaced apart holders, the material support having coupling means thereon for securing the storage rack to said barrier.

The or each leg may comprise two inter-connectable limbs, a lower limb connected to a respective foot, and a detachable upper limb having a coupling means thereon also for securing the storage rack to said barrier.

The elongate support may comprise a single assembly, or may comprise two inter-connectable portions.

The invention further comprises an aerial lift having a work platform surrounded by a safety barrier including a kick plate adjacent the platform, and a material storage rack according to the first aspect of the invention located within the safety barrier and having at least one foot in use resting on the platform with coupling means securing the rack to said barrier.

Preferably the platform is a rectangular platform with at least one rack secured to at least one side of the platform.

According to yet another aspect of the present invention there is provided a method of securing a material storage rack to an aerial lift having a work platform surrounded by a safety barrier with a kick plate adjacent the platform, wherein the storage rack has at least one leg having a foot which in use rests on the platform, the leg having a coupling means thereon for securing the rack to said kick plate, and the upper end portion of the or each leg is detachably connected to an elongate material support having coupling means thereon for securing the storage rack to said barrier, wherein in said method the leg is coupled to the kick plate and the foot then rested on the platform, the leg and foot are tilted to engage the catch with the kick plate and the foot then rested on the platform and the support is attached to the upright leg with its coupling means engaging the safety barrier.

### Description of the Drawings

The invention will be described by way of example and with reference to the accompanying drawings in which:-
- Fig. 1: is a side elevation of an aerial platform
- Fig. 2: is an isometric view of a material storage rack according to the present invention,
- Fig. 3: is a side elevation of the rack of Fig. 1 in use on an aerial platform,
- Fig. 4: is an isometric view of the rack shown in Fig. 1 with the upper portion of the legs removed,
- Fig. 5: is a side elevation of the rack of Fig. 3 in use on an aerial platform,
- Fig. 6: is a side elevation of rack during fitting and
- Fig. 7: shows a kit of components that make up the material storage rack.

### Detailed Description of the Invention

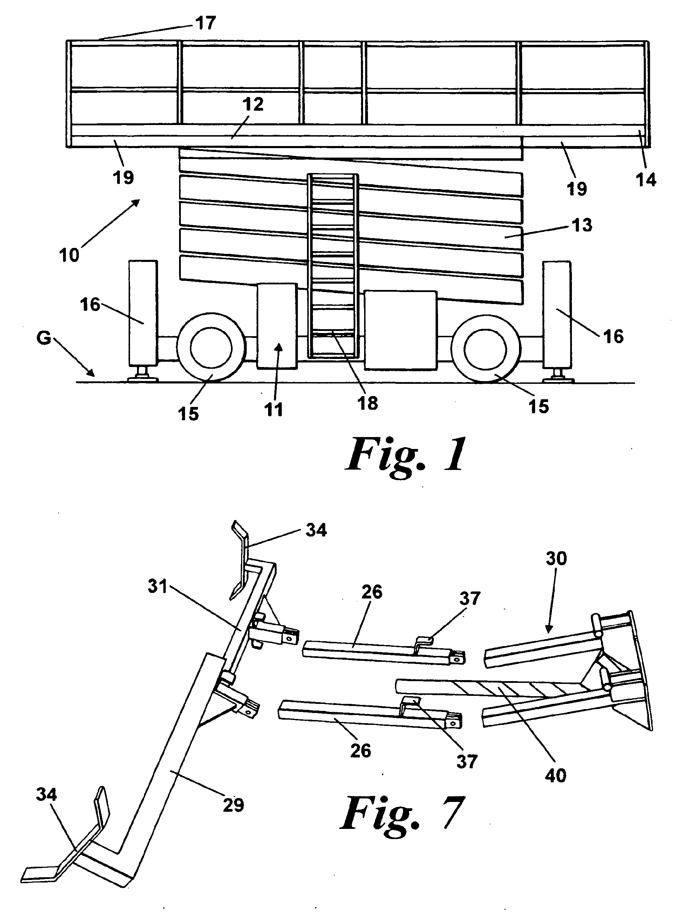

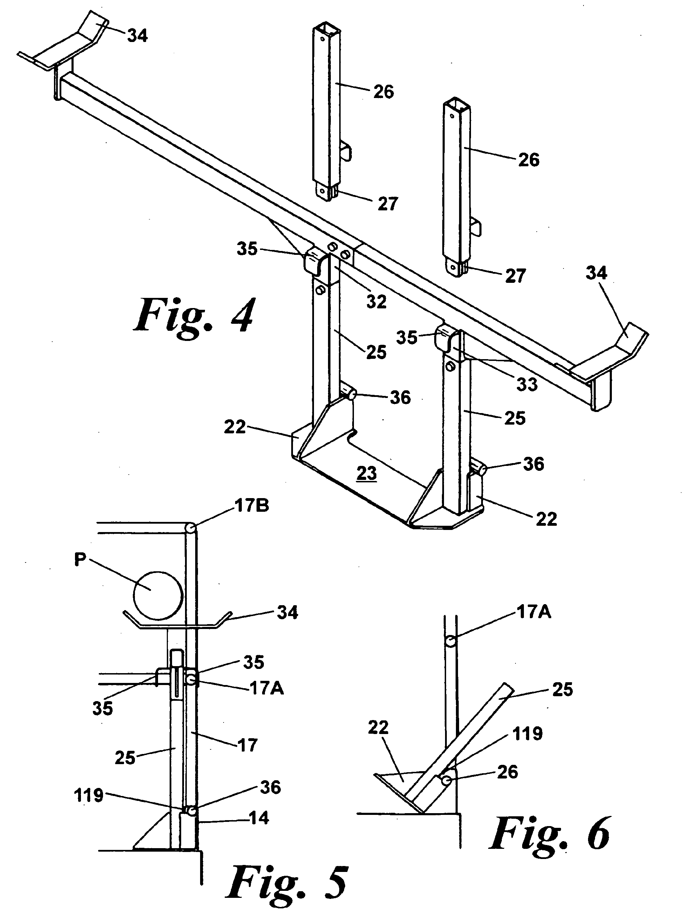

Fig. 1 shows an aerial lift 10 in the form of a self drive mobile scissor lift available from JLG Ind.. The lift 10 has a drivable vehicle body 11 having wheels 15 and a work platform 12 located on its body and which in use can be raised or lowered relative to the ground G. The platform 12 is shown in a lowered condition and the vehicle body is provided with stabilisers 16 at its corners which are lowered to provide stability during use of the lift. The work platform 12 is raised or lowered by a scissor type mechanism 13 typically operated by a powered hydraulic system provided on the lift. The platform 12 has extendable end portions 19 and the whole platform is provided with a safety barrier 17 including a kick plate 14 adjacent the platform 12. The kick plate 14 typically has an upper edge with an inwardly and downwardly turned lip 119 (see Fig.5). An access ladder 18 is provided on the body 11 for access to the platform 12 when in the lowered condition.

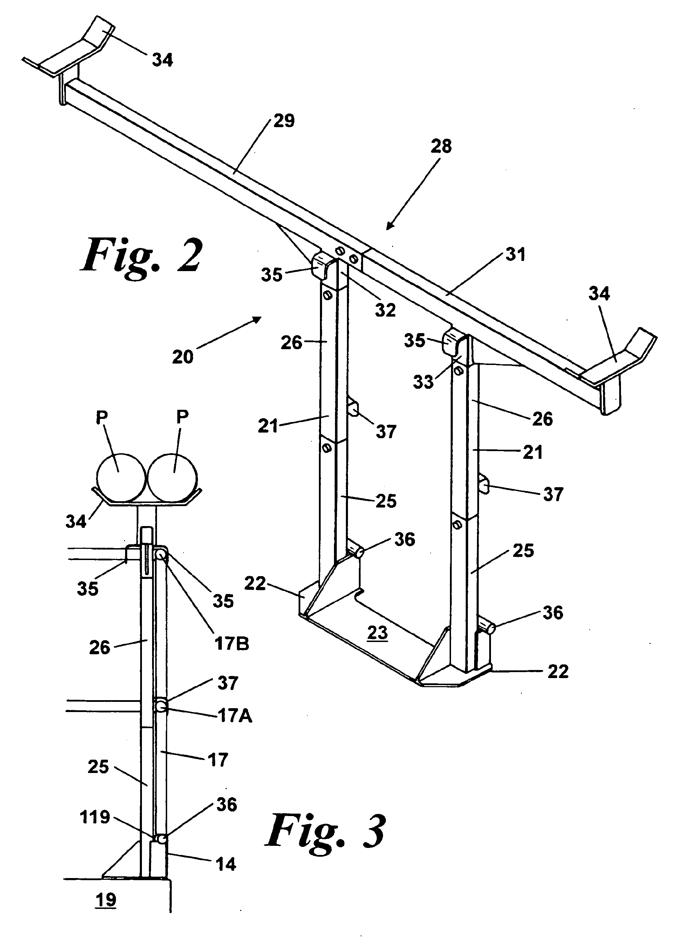

With reference now to Figures 2 to 5, there is shown a storage rack 20 for use on the aerial lift 10. The storage rack 20 has at least one leg 21, and preferably two spaced apart legs 21, each of which has a foot 22 at its lower end which in use rests on the platform 19. The two feet 21 are interconnected by a base plate 23 which also rests against the platform. The two feet and the base plate may be formed as a single assembly 30 as shown in Fig.7. At least one arm 40 (shown in Fig,7 only) which in use also rests against platform, may be attached to the base plate 23 to extend normally inwardly thereof (that is inward relative to the platform). This helps further stabilise the rack.

Each leg 21 is formed from one lower limb 25 which is secured to its respective foot 22, with an optional and separable upper limb 26. The upper end limb 26 is provided with a lower end portion 27 which is a sliding fit within the upper end portion of the lower limb 25. Should a higher level rack is required the two limbs 25,26 may be secured together by suitable locking means, e.g nuts and bolts, pins etc.. This is shown in Figs 2 & 3. If a lower level rack is required, the upper limb 26 may be omitted, as shown in Figs 4 and 5.

An elongate material support 28 is detachably mounted to the upper end portion of either limb 25 or 26 depending upon the rack height. The material support comprises two inter-connectable struts 29,31, with a pair of spaced apart material holders 34 secured one at each remote end of the inter-connected struts. The under-side of each strut 29,31 is provided with a connector means 32,33, substantially similar to the end portion 27, for detachably connecting support 28 to the two legs 21. The material support 28 is further with coupling means 35 thereon for securing the storage rack to the barrier 17 on the platform 19. Preferably the coupling means 35 are in the form of downwardly facing hooks which are located one on each side of each respective connector means 32 and 33. The material holders 34 may be shaped to any required shape suitable for supporting the material to be stored on the rack. The support assembly 28 may also be supplied as a single unit.

The upper limb 26 of each leg is also provided on its outwardly facing surface with a coupling means 37 thereon for securing the rack to the barrier. The coupling means 37 is substantially the same as coupling means 35. The lower limb 25 of each leg 21 is provided on an outwardly facing surface (outward with respect to the platform) with a catch 36 adjacent its foot 22 which is engageable with a detent on the kick plate, conveniently formed by the downwardly turned lip 119 of the kick plate 14, to hold the respective foot 22 in proximity to the kick plate 14.

The storage rack 20 is installed on the work platform 19 by placing the lower assembly, comprising the two lower limbs 25 of the legs 21, feet 22 and base plate 23, onto the platform 19 within the safety barrier 17 adjacent the kick plate 14. The lower limb 25 is tilted outwardly as shown in Fig.6 to engage the catch 36 under the lip 119 of the kick plate 14 and is then brought upright with the feet 22 resting flat against the platform. The legs are now substantially upright and coupled to the kick plate.

The material support 38 can now be assembled to the upright lower limbs 25 with the hooks 35 engaging over the barrier rail 17A, as shown in Fig. 5. Alternatively, the upper limbs 26 assembled to the lower limbs 25 with the hooks 37 engaging over the lower rail 17A of the barrier as shown in Fig. 3, and the support 38 then assembled to the upper limbs 26 with the hooks 35 engaging over the top rail 17B. The material storage rack 20 may be used for the storage of lengths of the pipe P adjacent the barrier 17 to one side of the platform 19 whilst leaving the centre of the platform open. In use, the material storage rack 20 with the pipe in situ is lifted into position using the aerial lift.

With reference to Fig.7, the storage rack 20 is supplied as a kit of separate parts which are then assembled together. The parts comprise the assembly 30, upper limbs 26, the stabilizing arm 40, and the struts 29 & 31 with holders 34 optionally secured in place.

## Claims

1. A storage rack (20) for use on an aerial lift (10) having a work platform (12) surrounded by a safety barrier (17) with a kick plate (14) adjacent the platform (12), the storage rack (20) having at least one leg (21) with a foot (22) which in use rests on the platform, **characterised in that** the leg (21) has coupling means (36) thereon for securing the rack to the kick plate, said coupling means (36) being engageable with a detent on the kick plate (14) formed by an inwardly and downwardly turned lip (119) of the kick plate (14).

2. A storage rack comprises as claimed in Claim 1 and comprising a pair of spaced apart legs(21) with the two feet (22) being interconnected by a base plate (23) which in use also rests against the platform (12).

3. A storage rack as claimed in Claim 2 further comprising at least one arm (40) which in use also rests against platform and which is attached to the base plate (23) to extend normally inwardly thereof.

4. A storage rack as claimed in any one of Claims 1 to 3, wherein each leg (21) at its lower end portion is provided with a catch (36) which is engagable with the detent (119) on the kick plate (14) to hold the respective foot (22) adjacent the kick plate (14).

5. A storage rack as claimed in any one of Claims 1 to 4 wherein the upper end portion (26) of the or each leg (21) is detachably connected to an elongate material support (28) having further coupling means (35) thereon for securing the storage rack (20) to said barrier (17).

6. A storage rack as claimed in any one of Claims 1 to 5, wherein the or each leg (21) comprises two inter-connectable limbs (25,26), a lower limb (25) connected to a respective foot (22), and an optional detachable upper limb (26) having a coupling means (37) thereon also for securing the storage rack (20) to said barrier (17).

7. A storage rack as claimed in Claim 5 or Claim 6 wherein the elongate support (28) comprises two inter-connectable portions (29 & 31).

8. An aerial lift (10) having a work platform (12) surrounded by a safety barrier (17) including a kick plate (14) adjacent the platform (12) , the kick plate (14) having a detent formed by an inwardly and downwardly turned lip (119), and a material storage rack (20) according to any one of Claims 1 to 7, located within the safety barrier (17) and having at least one foot (22) in use resting on the platform (12) with coupling means (36) securing the rack (20) to said barrier.

9. An aerial lift as claimed in Claim 8, wherein the platform (12) is a rectangular platform with at least one rack (20) secured to the safety barrier on at least one side of the platform.

10. A method of securing a material storage rack (20) according to any one of claims 1 to 7 to an aerial lift (10) according to any one of claims 8 or 9 having a work platform (12) surrounded by a safety barrier (17) with a kick plate (14) adjacent the platform (12), wherein the storage rack (20) has at least one leg (21) with a foot (22) which in use rests on the platform (12), the leg (21) having a coupling means (36) thereon for securing the rack (20) to said kick plate (14), and an upper end portion (26) which is detachably connected to an elongate material support (28) also having coupling means (35) thereon for securing the storage rack (20) to said barrier (17), wherein in said method the leg (21) is coupled to the kick plate (14) and the foot (22) then rested on the platform (12), the leg and foot being tilted to engage the catch (36) with the kick plate (14) and the foot (22) then rested on the platform, and the support(28) is attached to the now substantially upright leg (21) with its coupling means engaging the safety barrier.

## Patentansprüche

1. Lagerungsgestell (20) zur Verwendung auf einer Hubarbeitsbühne (10), die über eine Arbeitsplattform (12) verfügt, welche umgeben ist von einer Sicherheitsbarriere (17) mit einer an die Plattform (12) angrenzenden Trittplatte (14), wobei das Lagerungsgestell (20) über mindestens ein Bein (21) mit einem Fuß (22) verfügt, der im Gebrauch auf der Plattform aufsitzt, **dadurch gekennzeichnet, dass** sich an dem Bein (21) eine Kopplungsvorrichtung (36) befindet, die der gesicherten Befestigung des Gestells an der Trittplatte dient, wobei diese Kopplungsvorrichtung (36) in eine Arretierung an der Trittplatte (14) eingreifen kann, die durch eine nach innen und nach unten gebogene Lippe (119) der Trittplatte (14) gebildet wird.

2. Lagerungsgestell gemäß Anspruch 1 und umfassend ein Paar von mit Abstand zueinander angeordneten Beinen (21), wobei die beiden Füße (21) durch eine Grundplatte (23) miteinander verbunden sind, die im Gebrauch ebenfalls auf der Plattform (12) aufsitzt.

3. Lagerungsgestell gemäß Anspruch 2, des Weiteren umfassend mindestens einen Arm (40), der im Gebrauch ebenfalls auf der Plattform aufsitzt und der an der Grundplatte (23) befestigt ist, um von dieser aus normalerweise nach innen zu verlaufen.

4. Lagerungsgestell gemäß einem der Ansprüche 1 bis 3, wobei jedes Bein (21) an seinem unteren Endabschnitt mit einer Raste (36) versehen ist, die in die Arretierung (119) an der Trittplatte (14) eingreifen kann, um den jeweiligen Fuß (22) angrenzend an die Trittplatte (14) festzuhalten.

5. Lagerungsgestell gemäß einem der Ansprüche 1 bis 4, wobei der obere Endabschnitt (26) von dem bzw. von jedem Bein (21) abnehmbar mit einer langen Materialstütze (28) verbunden ist, an der sich eine weitere Kopplungsvorrichtung (35) befindet, die der gesicherten Befestigung des Lagerungsgestells (20) an der Barriere (17) dient.

6. Lagerungsgestell gemäß einem der Ansprüche 1 bis 5, wobei das bzw. jedes Bein (21) zwei miteinander verbindbare Schenkel (25, 26) umfasst, wobei ein unterer Schenkel (25) mit einem jeweiligen Fuß (22) verbunden ist und ein optional abnehmbarer oberer Schenkel (26) über eine Kopplungsvorrichtung (37) verfügt, die ebenfalls der gesicherten Befestigung des Lagerungsgestells (20) an der Barriere (17) dient.

7. Lagerungsgestell gemäß Anspruch 5 oder Anspruch 6, wobei die lange Stütze (28) zwei miteinander verbindbare Abschnitte (29 und 31) umfasst.

8. Hubarbeitsbühne (10), die über eine Arbeitsplattform (12) verfügt, welche umgeben ist von einer Sicherheitsbarriere (17) mit einer an die Plattform (12) angrenzenden Trittplatte (14), wobei die Trittplatte (14) über eine Arretierung verfügt, die durch eine nach innen und nach unten gebogene Lippe (119) gebildet wird, sowie über ein Materiallagerungsgestell (20) gemäß einem der Ansprüche 1 bis 7, das sich innerhalb der Sicherheitsbarriere (17) befindet und über mindestens einen Fuß (22) verfügt, der im Gebrauch auf der Plattform (12) aufsitzt, wobei eine Kopplungsvorrichtung (36) das Gestell (20) gesichert an der Barriere befestigt.

9. Hubarbeitsbühne gemäß Anspruch 8, wobei es sich bei der Plattform (12) um eine rechteckige Plattform handelt und mindestens ein Gestell (20) an mindestens einer Seite der Plattform gesichert an der Sicherheitsbarriere befestigt ist.

10. Verfahren zur gesicherten Befestigung eines Materiallagerungsgestells (20) gemäß einem der Ansprüche 1 bis 7 an einer Hubarbeitsbühne (10) gemäß einem der Ansprüche 8 oder 9, die über eine Arbeitsplattform (12) verfügt, welche umgeben ist von einer Sicherheitsbarriere (17) mit einer an die Plattform (12) angrenzenden Trittplatte (14), wobei das Lagerungsgestell (20) über mindestens ein Bein (21) mit einem Fuß (22) verfügt, der im Gebrauch auf der Plattform (12) aufsitzt, wobei das Bein (21) über eine Kopplungsvorrichtung (36) verfügt, die der gesicherten Befestigung des Gestells (20) an der Trittplatte (14) dient, und über einen oberen Endabschnitt (26) verfügt, der abnehmbar mit einer langen Materialstütze (28) verbunden ist, an der sich ebenfalls eine Kopplungsvorrichtung (35) zur gesicherten Befestigung des Lagerungsgestells (20) an der Barriere (17) befindet, wobei bei dem Verfahren das Bein (21) mit der Trittplatte (14) und dem Fuß (22) gekoppelt wird, dann auf die Plattform (12) aufgesetzt wird, wobei das Bein und der Fuß gekippt werden, um die Raste (36) in die Trittplatte (14) eingreifen zu lassen, dann der Fuß (22) auf der Plattform aufgesetzt wird, und schließlich die Stütze (28) an dem jetzt im Wesentlichen aufrecht stehenden Bein (21) befestigt wird, wobei deren Kopplungsvorrichtung in die Sicherheitsbarriere eingreift.

## Revendications

1. Un râtelier de stockage (20) pour une utilisation sur une nacelle élévatrice (10) ayant une plate-forme de travail (12) entourée d'une barrière de sécurité (17) avec un garde-pieds (14) adjacent à la plate-forme (12), le râtelier de stockage (20) ayant au moins une patte (21) avec un pied (22) qui lors de l'utilisation repose sur la plate-forme, **caractérisé en ce que** la patte (21) a un moyen de couplage (36) sur elle pour assujettir le râtelier au garde-pieds, ledit moyen de couplage (36) pouvant se mettre en prise avec un encliquetage sur le garde-pieds (14) formé par une lèvre tournée vers l'intérieur et vers le bas (119) du garde-pieds (14).

2. Un râtelier de stockage comportant ce qui est revendiqué dans la revendication 1 et comportant une paire de pattes espacées (21), les deux pieds (22) étant interconnectés par une plaque d'appui (23) qui lors de l'utilisation repose également contre la plate-forme (12).

3. Un râtelier de stockage tel que revendiqué dans la revendication 2 comportant de plus au moins un bras (40) qui lors de l'utilisation repose également contre la plate-forme et qui est attaché à la plaque d'appui (23) pour s'étendre normalement vers l'intérieur de cette dernière.

4. Un râtelier de stockage tel que revendiqué dans n'importe laquelle des revendications 1 à 3, dans lequel chaque patte (21) au niveau de sa portion d'extrémité inférieure est munie d'un cran (36) qui peut se mettre en prise avec l'encliquetage (119) sur le garde-pieds (14) pour maintenir le pied respectif (22) adjacent au garde-pieds (14).

5. Un râtelier de stockage tel que revendiqué dans n'importe laquelle des revendications 1 à 4 dans lequel la portion d'extrémité supérieure (26) de la ou de chaque patte (21) est connectée de façon détachable à un support de matériel allongé (28) ayant un moyen de couplage (35) supplémentaire sur lui pour assujettir le râtelier de stockage (20) à ladite barrière (17).

6. Un râtelier de stockage tel que revendiqué dans n'importe laquelle des revendications 1 à 5, dans lequel la ou chaque patte (21) comporte deux membres interconnectables (25, 26), un membre inférieur (25) connecté à un pied respectif (22), et un membre supérieur détachable optionnel (26) ayant un moyen de couplage (37) sur lui également pour assujettir le râtelier de stockage (20) à ladite barrière (17).

7. Un râtelier de stockage tel que revendiqué dans la revendication 5 ou la revendication 6 dans lequel le support allongé (28) comporte deux portions interconnectables (29 & 31).

8. Une nacelle élévatrice (10) ayant une plate-forme de travail (12) entourée d'une barrière de sécurité (17) comprenant un garde-pieds (14) adjacent à la plate-forme (12), le garde-pieds (14) ayant un encliquetage formé par une lèvre tournée vers l'intérieur et vers le bas (119), et un râtelier de stockage de matériel (20) selon n'importe laquelle des revendications 1 à 7, situé à l'intérieur de la barrière de sécurité (17) et ayant au moins un pied (22) reposant sur la plate-forme (12) lors de l'utilisation avec un moyen de couplage (36) assujettissant le râtelier (20) à ladite barrière.

9. Une nacelle élévatrice telle que revendiquée dans la revendication 8, dans laquelle la plate-forme (12) est une plate-forme rectangulaire avec au moins un râtelier (20) assujetti à la barrière de sécurité sur au moins un côté de la plate-forme.

10. Un procédé pour assujettir un râtelier de stockage de matériel (20), selon n'importe laquelle des revendications 1 à 7 à une nacelle élévatrice (10) selon n'importe laquelle des revendications 8 ou 9 ayant une plate-forme de travail (12) entourée d'une barrière de sécurité (17) avec un garde-pieds (14) adjacent à la plate-forme (12), dans lequel le râtelier de stockage (20) a au moins une patte (21) avec un pied (22) qui lors de l'utilisation repose sur la plate-forme (12), la patte (21) ayant un moyen de couplage (36) sur elle pour assujettir le râtelier (20) audit garde-pieds (14), et une portion d'extrémité supérieure (26) qui est connectée de façon détachable à un support de matériel allongé (28) ayant également un moyen de couplage (35) sur lui pour assujettir le râtelier de stockage (20) à ladite barrière (17), dans lequel dans ledit procédé la patte (21) est couplée au garde-pieds (14) et le pied (22) ensuite reposé sur la plate-forme (12), la patte et le pied étant inclinés pour se mettre en prise avec le cran (36), le garde-pieds (14) et le pied (22) ensuite reposés sur la plate-forme, et le support (28) est attaché à la patte désormais substantiellement droite (21), le moyen de couplage se mettant en prise avec la barrière de sécurité.
